**Europäisches Patentamt**

**European Patent Office**

**Office européen des brevets**

(11) Numéro de publication: **0 127 505**
**A1**

(12) **DEMANDE DE BREVET EUROPEEN**

(21) Numéro de dépôt: **84400864.9**

(22) Date de dépôt: **27.04.84**

(51) Int. Cl.³: **A 01 F 25/20**

(30) Priorité: **20.05.83 FR 8308445**

(43) Date de publication de la demande:
**05.12.84 Bulletin 84/49**

(84) Etats contractants désignés:
**BE DE GB IT NL**

(71) Demandeur: **Deboffles, Régis Pierre Arthur
Abbecourt
F-02300 Chauny(FR)**

(72) Inventeur: **Deboffles, Régis Pierre Arthur
Abbecourt
F-02300 Chauny(FR)**

(74) Mandataire: **Bonnetat, Christian et al,
Cabinet PROPI Conseils 23 rue de Léningrad
F-75008 Paris(FR)**

(54) **Dispositif pour le prélèvement et le chargement de matière compactée.**

(57) Selon l'invention, le dispositif est caractérisé en ce qu'il comporte un organe de coupe (13) associé à l'organe de chargement (3), disposé de manière que l'organe de chargement soit susceptible de prendre une première position de chargement pour laquelle ledit organe de chargement est en position de travail, tandis que l'organe de coupe est escamoté, et une seconde position de découpage pour laquelle l'organe de chargement est escamoté et l'organe de coupe est en position de travail face à un front de taille de la matière compactée.

Fig.1

**EP 0 127 505 A1**

Dispositif pour le prélèvement et le chargement de matière compactée.

La présente invention concerne un dispositif pour le prélèvement et le chargement de matière compactée.

On connait l'utilité de l'ensilage de certaines matières, notamment dans le domaine de l'agriculture pour le stockage de végétaux par exemple destinés à la nourriture des animaux.

Ces matières sont soumises à des pressions relativement élevées afin d'obtenir un compactage efficace, en vue de leur bonne conservation dans le temps.

En effet, il est primordial que l'oxygène ne pénètre pas dans la masse du tas de matière, afin d'empêcher le dégradement par processus aérobie, donnant lieu au phénomène de pourrissement.

En conséquence, le prélèvement de la quantité désirée de matière doit être effectuée sans désorganiser ni remuer la matière ensilée, ce que risquerait de favoriser la pénétration de l'oxygène à la faveur d'interstices.

Or, les dispositifs connus destinés au prélèvement de ce genre de matière sont usuellement constitués de deux fourches formant pince. Après mise en place de celles-ci sur le bord du tas, le recul de l'outil avec son chargement provoque l'arrachage de la matière et laisse un bord frontal irrégulier et présentant des ouvertures et fentes par lesquelles pénètre l'air, avec les conséquences mentionnées précédemment.

Il est aisé de comprendre que les dispositifs connus ne donnent pas satisfaction pour les matières en silos.

De plus, dans le domaine de l'agriculture, il existe un grand nombre de variétés de produits et matières à manipuler, transborder et stocker, et de natures différentes, telles que des matières pulvérulentes (grain, engrais), denses et plastiques (fumier) ou fibreuses (paille).

**0127505**

En conséquence, l'utilisateur a besoin de dispositifs de chargement distincts pour chaque type de matière.

Or, les dispositifs connus, bien que permettant d'extraire ou de prélever une certaine quantité de matière hors d'un silo ou d'un tas, sont limités dans leurs possibilités à une famille de matières donnée.

La présente invention remédie à ces inconvénients et concerne un dispositif susceptible de prélever et transporter des matières et matériaux divers, et permettant le prélèvement selon un bord net et franc de matière ensilée.

A cette fin selon l'invention, le dispositif pour le prélèvement et le chargement d'une matière compactée, du type associé à un véhicule et comportant un organe de chargement tel que benne ou godet, articulé sur au moins un bras selon un axe horizontal, ledit bras étant lui-même articulé sur le véhicule, selon un axe horizontal, est caractérisé en ce qu'il comporte un organe de coupe associé à l'organe de chargement, les articulations de ce dernier sur le bras et la et la disposition respective des organes de chargement et de coupe étant telle que l'organe de chargement est susceptible de prendre deux positions, soit une première position de chargement pour laquelle ledit organe de chargement est en position de travail, tandis que l'organe de coupe est escamoté, et une seconde position de découpage pour laquelle l'organe de chargement est escamoté et l'organe de coupe est en position de travail face à un front de taille de la matière compactée, la longueur du bras étant suffisante pour que son débattement par rapport au véhicule lui permette, en position de travail de l'organe de coupe, de se déplacer sur toute la hauteur du front de taille.

Ainsi, grâce à l'organe de chargement articulé, il est possible de prélever des matières et matériaux pâteux, pulvérulents ou analogues, par mise en place de celui-ci dans la première position de travail, face ouverte vers la matière, afin d'assurer le transport de celle-ci, vers un conteneur par exemple.

En outre, l'utilisateur peut effectuer, sans changement d'outil, l'extraction de matériau dense et compact hors d'un silo. A cet effet, l'organe de chargement est disposé dans sa seconde position où l'organe de coupe est susceptible de porter contre le front de taille. Le mouvement du bras permet le déplacement de l'organe de coupe et donc le découpage dudit front de taille, selon un bord net et franc. Le ramassage de la matière extraite est ensuite effectué grâce à l'organe de chargement disposé en sa première position.

Selon une forme avantageuse de réalisation, l'organe de coupe est constitué d'un rouleau rotatif d'axe horizontal et pourvu sur sa surface de dents susceptibles de pénétrer dans la matière et de découper celle-ci.

Afin de favoriser le mouvement ample des organes respectivement de chargement et de coupe, particulièrement utile dans le cas de silo de hauteur élevée, le bras est articulé sur le bord supérieur de l'une des faces d'extrémité du véhicule, de manière à pouvoir prendre une position de repos sensiblement verticale pour laquelle il est plaqué contre la face d'extrémité correspondante du véhicule, tandis que l'organe de chargement est articulé à l'autre extrémité dudit bras.

Dans le but d'assurer une position repliée d'encombrement minimal et un ramassage efficace , et de façon à gêner le moins possible les opérations de ramassage par la benne et également de favoriser le processus de découpage par l'organe de coupe, le dispositif du type dans lequel la benne de chargement comporte une face arrière susceptible d'être disposée sensiblement verticale et parallèle à une face d'extrémité du véhicule en position repliée du bras, et une face avant inclinée telle qu'en première position de la benne de chargement,elle soit parallèle au sol, est remarquable en ce que l'organe de coupe est disposé à proxi-

0127505

mité et parallèlement au bord supérieur de la face arrière de la benne.

Avantageusement, le rouleau rotatif comporte une première série de dents longitudinales sensiblement parallèles aux génératrices et une seconde série de dents transversales disposées sensiblement selon des cercles du rouleau. Ainsi on obtient un découpage par tranche grâce à la disposition et la forme des dents.

De préférence, les dents transversales sont disposées en alignement suivant des cercles parallèles du rouleau, chaque cercle étant distant du cercle suivant d'une distance correspondant sensiblement à la longueur des dents longitudinales, deux cercles consécutifs définissant une section de cylindre comportant une série de dents longitudinales parallèles de manière qu'entre deux dents longitudinales successives soient disposées deux dents transversales sensiblement sur le bord de la section correspondante. Ainsi, lors de la rotation du rouleau, chaque couple de dents transversales découpe verticalement une tranche de matériau tandis que la dent longitudinale suivant immédiatement coupe horizontalement ladite tranche qui tombe alors.

En vue d'obtenir un découpage net et rapide, par tranches, les dents longitudinales sont de forme allongée et de section quadrangulaire, tandis que les dents transversales sont de section triangulaire, solidaires du rouleau par une face courbe correspondant à un côté du triangle et de manière que la face supérieure avant, destinée à entrer en contact la première avec la matière, sont inclinée vers l'avant.

De manière avantageuse, pour chaque section cylindrique du rouleau délimité par une succession de dents transversales les deux dents transversales séparant deux dents longitudinales consécutives et étant disposées en bordure de la section correspondante, sont décalées dans le sens de rotation. On aboutit alors à un découpage efficace.

Selon un exemple particulier de réalisation, le rouleau présente une longueur comprise entre 1 et 2 mètres, un diamètre compris entre 150 et 300 mm, la longueur des dents longitudinales étant de 70 mm et la hauteur des dents longitudinales et transversales étant de 20 mm.

L'invention concerne également un rouleau susceptible d'être entrainé en rotation autour de son axe et destiné à l'extraction et au découpage de matière compactée et selon un front de taille de cette dernière, et présentant l'une des caractéristiques ci-dessus.

L'invention sera bien comprise à la lumière des dessins annexés.

La figure 1 est une vue de côté du dispositif selon l'invention montré sur un véhicule.

La figure 2 montre une vue partielle en perspective du rouleau de coupe.

La figure 3 est un schéma montrant partiellement et en plan la surface développée à plat du rouleau et l'agencement des dents.

Les figures 4 et 5 montrent en perspective chacune une dent respectivement longitudinale et transversale.

Les figures 6A à 6D sont des schémas montrant du côté le fonctionnement du dispositif.

Le dispositif 1 selon l'invention est monté sur un véhicule 2 dont seule la partie extrême a été figurée, de façon schématique.

Le dispositif comprend une benne de chargement 3 articulée selon un axe horizontal 4 sur un bras 5, lui-même monté en rotation sur le bord extrême supérieur du véhicule 2, selon un axe horizontal 6.

La benne est susceptible d'être basculée à l'aide d'au moin un vérin 7, tandis qu'au moins un vérin 8, articulé sur l'extrémité du bras 5, commande le mouvement de rotation de ce dernier.

Sur la figure, la bras 5 et la benne 3 sont représentés en position de repos repliée contre une face d'extrémité du véhicule.

La benne 3 comporte une face arrière 9, solidaire d'une extrémité du vérin 7, un fond 10 et une face avant 11 inclinée de manière qu'en position basculée de la benne vers l'avant, ladite face avant 11 porte contre le sol.

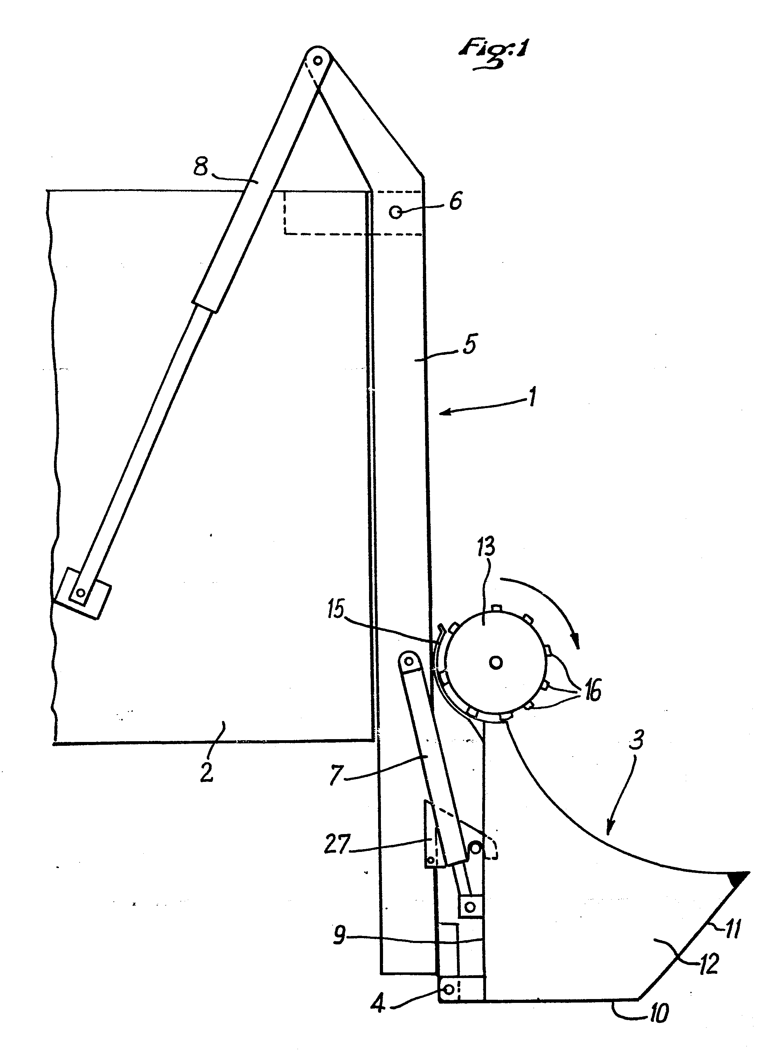

Le fond 10 et les faces avant 11 et arrière 10 sont reliées par des parois latérales 12 (dont une seule est visible sur la figure 1).

A proximité du bord supérieur de la face arrière 9 est fixé un rouleau 13 de découpage de forme cylindrique et rotatif autour de son axe longitudinal 14 ainsi que l'indiquent les flèches des figures 1 et 2.

Un flasque arrière 15, destiné à protéger les utilisateurs et l'environnement des projections de matière, est rendu solidaire du bord supérieur de la face arrière de la benne.

Le rouleau 13 de découpage est pourvu sur sa surface de dents 16 en saillie, constituées de dents longitudinales 17 disposées sensiblement selon les génératrices du rouleau, et de

dents transversales 18 disposées selon des cercles de ce dernier.

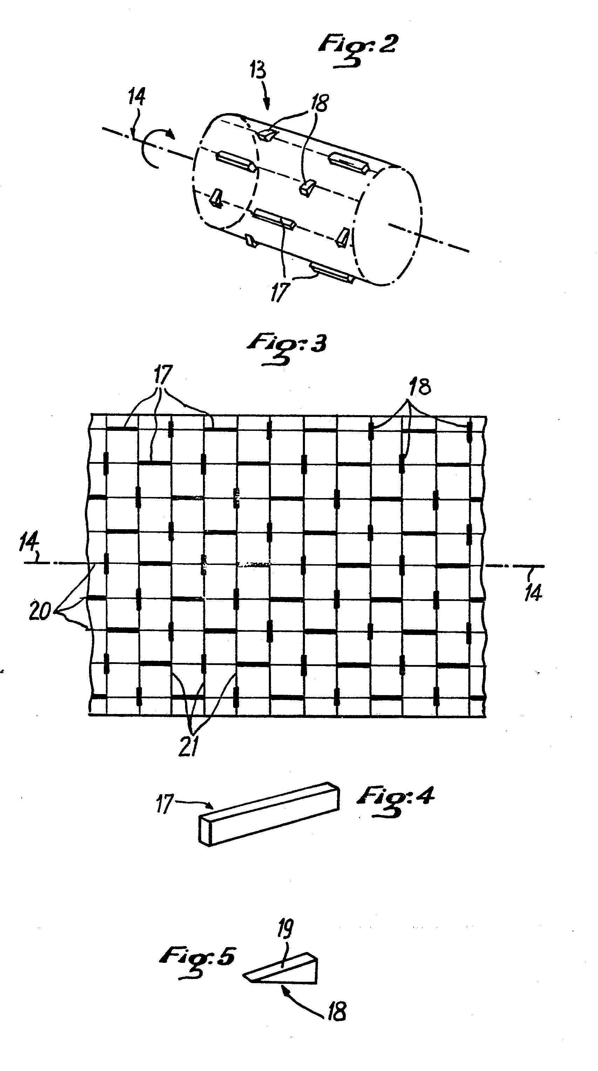

Les figures 4 et 5 montrent chacune une forme de réalisation, respectivement d'une dent longitudinale 17 et d'une dent transversale 18.

La dent longitudinale 17 est formée d'un parallélépipède rectangle et est rendue solidaire du rouleau par une de ses faces allongées.

La dent transversale 18 est en forme de prisme à base triangulaire, de préférence rectangle, fixée sur le rouleau par un de ses longs côtés de manière que la face supérieure 19, opposées au rouleau, soit inclinée vers l'avant dans le sens de la rotation.

Sur la figure 3, représentant à plat partiellement la surface du rouleau, ont été représentées des génératrices 20 respectivement espacées et des méridiens transversaux 21 (correspondants à des cercles sur le rouleau), qui ne sont qu'une schématisation abstraite et sans existence réelle sur la surface du rouleau.

Sur chaque génératrice 20 et chaque méridien 21, alternent successivement une dent longitudinale 17 et une dent transversale 18.

Chaque couple de méridien successif délimité une section transversale du cylindre.

De préférence, les dents longitudinales 17 sont disposées parallèlement entre elles et en alignement de façon que leur longueur corresponde à la largeur de la section correspondante, c'est-à-dire à l'écartement des cercles porteurs chacun d'une série de dents transversales.

En outre, entre deux dents longitudinales sont disposées deux dents transversales, de préférence décalées dans le sens de la rotation.

Ainsi, lors de la rotation du rouleau en contact avec le front de taille de la matière ensilée, ladite matière est découpée en bandes verticales, d'abord verticalement par les deux dents transversales à section triangulaire, puis horizontalement par la dent longitudinale suivante.

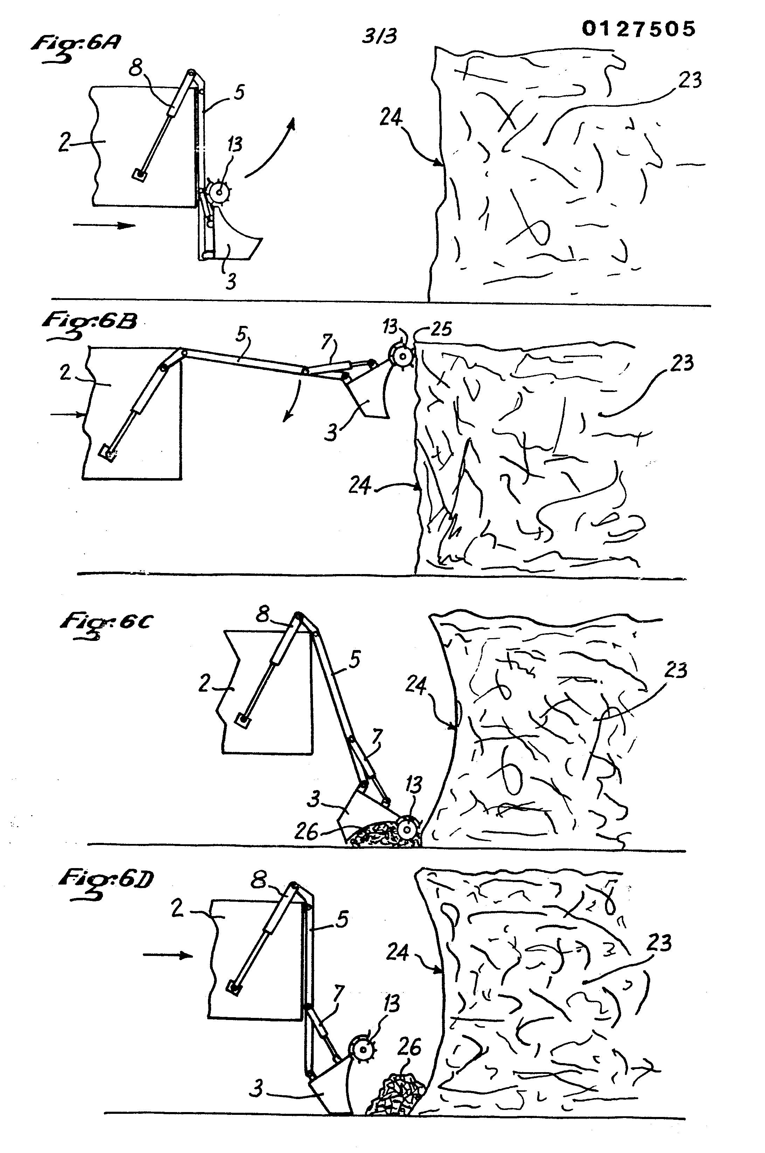

Le fonctionnement du dispositif est le suivant, en se référant aux figures 6A, 6B, 6C et 6D montrant de façon schématique la chronologie des étapes successives de prélèvement de matière hors d'un silo 23.

Dans un premier temps (figure 6A), le véhicule 2 pourvu du dispositif 1 s'approche du silo 23 et du front de taille 24 de celui-ci, en supposant que la position initiale du bras 5 et de la benne de chargement 3 est la position de repos représentée sur la figure 1.

Ensuite, (voir la figure 6B), le bras 5 est levé (par le vérin 8) et la benne est basculée (par le vérin 7) en une position escamotée, de manière que le rouleau 13 soit porté en avant et vienne buter contre le bord supérieur 25 du front de taille 24.

La longueur du bras 5 est prévue pour permettre le débattement nécessaire et la mise en position de travail du rouleau 13 au sommet du silo 23. Le bras 5 peut être également télescopique.

Puis, le rouleau 13 est mis en rotation, par des moyens d'actionnement connus en eux-mêmes, et le bras est abaissé par le vérin 8 tout en maintenant le rouleau 13 de découpage en contact avec le front de taille 24, grâce au mouvement du véhicule.

On aboutit alors à la position représentée sur la figure 6C, où la benne est toujours en position escamotée, tandis que le rouleau 13 est encore en position de travail et a atteint la base du front de taille. Un tas de matière 26 est formé au pied du silo 23 lors de la descente du rouleau le long du front de taille, et provenant de la chute de la matière découpée. Le front de taille 24 présente alors une forme légèrement arrondie.

Enfin, le véhicule est reculé (voir la figure 6D) et la benne 3 est replacée en sa position de travail, ce qui entraine la mise en position escamotée du rouleau 13 de découpage, tandis que le bras 5 est de préférence ramené vers la face frontale du véhicule. Ce dernier avance alors vers le tas de matière 26 découpée, afin de ramasser celle-ci en vue de son transport, vers un conteneur par exemple.

Le rouleau de découpage 13 est susceptible d'effectuer autant de passages que nécessaire sur le front de taille.

L'organe de coupe prévu sur le dispositif selon l'invention a été décrit sous une forme de réalisation consistant en un rouleau rotatif denté. Bien entendu, l'invention n'est pas limitée à cet exemple et tout autre organe de coupe est susceptible de procurer le même résultat.

Le dispositif comporte avantageusement un organe de blocage amovible 27 en position repliée de la benne contre le bras 5 (voir la figure 1).Ledit organe 27 est monté rotatif sur le bras 5 et comporte un crochet coopérant avec un tenon solidaire de la benne 3.

A titre purement indicatif et sans caractère limitatif, il est donné ci-après les dimensions et nombre de dents pour un rouleau de diamètre d'environ 200 mm.

Nombre de dents sur la circonférence :                           9

Espacement entre deux dents successives le long

d'une génératrice :                                            70 mm

Longueur d'une dent longitudinale :                            70 mm

Hauteur d'une dent longitudinale :                             17 mm

Longueur du côté d'une dent transversale fixée sur

le rouleau :                                                   40 mm

Hauteur d'une dent transversale :                              17 mm

11

0127505

REVENDICATIONS

1- Dispositif pour le prélèvement et le chargement d'une matière compactée, du type associé à un véhicule et comportant un organe de chargement (3), tel que benne ou godet, articulé sur au moins un bras (5) selon un axe horizontal (4), ledit bras (5) étant lui-même articulé sur le véhicule (2) selon un axe horizontal (6), caractérisé en ce qu'il comporte un organe de coupe (13) associé à l'organe de chargement (3), les articulations de ce dernier sur le bras et la disposition respective des organes de chargement (3) et de coupe (13) étant telle que l'organe de chargement est susceptible de prendre deux positions, soit une première position de chargement pour laquelle ledit organe de chargement est un position de travail, tandis que l'organe de coupe est escamoté, et une seconde position de découpage pour laquelle l'organe de chargement est escamoté et l'organe de coupe est en position de travail face à un front de taille (24) de la matière compacte (23) la longueur du bras (5) étant suffisante pour que son débattement par rapport au véhicule (2) lui permette , en position de travail de l'organe de coupe (13), de se déplacer sur toute la hauteur du front de taille (24).

2- Dispositif selon la revendication 1, caractérisé en ce que l'organe de coupe est constitué d'un rouleau rotatif (13) d'axe horizontal et pourvu sur sa surface de dents (16) susceptibles de pénétrer dans la matière et de découper celle-ci.

3- Dispositif selon l'une des revendications 1 ou 2, caractérisé en ce     le bras (5) est articulé sur le bord supérieur de l'une aes faces d'extrémité du véhicule (2) de manière à pouvoir prendre une position de repos sensiblement verticale pour laquelle il est plaqué contre la face d'extrémité correspondante du véhicule, tandis que l'organe de chargement (3) est articulé à l'autre extrémité dudit bras (5).

4- Dispositif selon l'une des revendications 1 à 3, du type dans lequel la benne de chargement (3) comporte une face arrière (9) susceptible d'être disposée sensiblement verticale et parallèle à une face d'extrémité du véhicule en position repliée du bras (5), et une face avant inclinée (11) telle qu'en première position de la benne chargement elle soit parallèle au sol, caractérisé en ce que l'organe de coupe (13) est disposé à proximité et parallèlement au bord supérieur de la face arrière (9) de la benne (3).

5- Dispositif selon la revendication 2, caractérisé en ce que le rouleau rotatif (13) comporte une première série de dents longitudinales (17) sensiblement parallèles aux génératrices (20) et une seconde série de dents transversales (18) disposées sensiblement selon des cercles (21) du rouleau.

6- Dispositif selon la revendication 5, caractérisé en ce que les dents transversales (18) sont disposées en alignement suivant des cercles parallèles du rouleau, chaque cercle (21) étant distant du cercle suivant d'une distance correspondant sensiblement à la longueur des dents longitudinales (17), deux cercles consécutifs définissant une section de cylindre comportant une série de dents longitudinales parallèles de manière qu'entre deux dents longitudinales successives soient disposées deux dents transversales sensiblement sur le bord de la section correspondante.

7- Dispositif selon l'une des revendications 5 ou 6, caractérisé en ce que les dents longitudinales (17) sont de forme allongée et de section quadrangulaire, tandis que les dents transversales (18) sont de section triangulaire, solidaires du rouleau (13) par une face courbe correspondant à un côté du triangle et de manière que la face supérieure avant (19) destinée à entrer en contact la première avec la matière, soit inclinée vers l'avant.

8- Dispositif selon l'une des revendications 5 à 7, caractérisé en ce que, pour chaque section cylindrique du rouleau délimité par une succession de dents transversales (18), les deux dents transversales séparant deux dents longitudinales consécutives et étant disposées en bordure de la section correspondante, sont décalées dans le sens de rotation.

9- Dispositif selon l'une des revendications 5 à 8, caractérisé en ce que le rouleau présente une longueur comprise entre 1 et 2 mètres, un diamètre compris entre 150 et 300 mm, la longueur des dents longitudinales étant de 7à mm et la hauteur des dents longitudinales et transversales étant de 20 mm.

10- Rouleau (13) susceptible d'être entrainé en rotation autour de son axe (14) et destiné à l'extraction et au découpage de matière compactée (23), et selon un front de taille (24) de cette dernière, spécifié sous l'unc des revendications 5 à 9.

*Fig.1*

Fig:2

Fig:3

Fig:4

Fig:5

0127505

Fig:6A

Fig:6B

Fig:6C

Fig:6D

Office européen
des brevets

## RAPPORT DE RECHERCHE EUROPEENNE

EP 84 40 0864

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl ³) |
|---|---|---|---|
| X | DE-A-2 809 225 (FÖCKERSPERGER) * page 11, dernier paragraphe; page 12; page 13; page 14; figures 1,2,3,4 * | 1,3,4 | A 01 F 25/20 |
| | --- | | |
| X | DE-A-2 935 870 (FÖCKERSPERGER) * page 7, dernier paragraphe; page 8; page 9; figures 1,2,3 * | 1,2,4, 8,9,10 | |
| | --- | | |
| A | FR-A-2 423 138 (TRUNKENPOLZ) * page 5, dernier paragraphe; page 6; page 7; figures 1,2,3,4,5,6,7 * | 2,5,6, 7 | |
| | --- | | |
| A | FR-A-1 430 701 (HARDER) | | |

**DOMAINES TECHNIQUES RECHERCHES (Int. Cl. ³)**

A 01 F

-----

Le présent rapport de recherche a été établi pour toutes les revendications

| Lieu de la recherche | Date d'achèvement de la recherche | Examinateur |
|---|---|---|
| LA HAYE | 27-08-1984 | VERMANDER R.H. |